# EUROPÄISCHE PATENTANMELDUNG

(11) **EP 4 310 041 A1**
(43) Veröffentlichungstag der Anmeldung: **24.01.2024**
(21) Anmeldenummer: 23184190.9
(22) Anmeldetag: 07.07.2023
(51) Int. Cl.: B65H 27/00

(54) **ADDITIV GEFERTIGTE LEITWALZE**

(30) Priorität: 22.07.2022 DE 102022118390
(71) Anmelder: manroland Goss web systems GmbH, 86153 Augsburg (DE)
(72) Erfinder: Echerer, Siegmund, 86672 Thierhaupten (DE); Stöckle, Erich, 86609 Donauwörth (DE); Blumhöfer, Michael, 86508 Rehling (DE)

(57) **Zusammenfassung**

Es ist Aufgabe der Erfindung, eine Leitwalze (1) sowie ein Verfahren zur Herstellung einer Leitwalze (1) zu schaffen, welche eine kostengünstige Herstellung einerseits und harte, verschleißbeständige, sich in Kontakt mit dem Substrat befindlichen Stegen (4) andererseits verbindet.

Die Aufgabe wird dadurch gelöst, dass mindestens ein Steg (4) aus einem von dem ersten Werkstoff (11) abweichenden zweiten Werkstoff (12) besteht.

Die Aufgabe wird ferner durch ein Verfahren gelöst, bei welchem die Stege (4) oder der mindestens eine Steg (4) mittels einem Auftragsschweißverfahren, einem thermischen Spritzverfahren, einem Plasma-Transfered-Arc-Spritzverfahren, einem Laser-Auftragsschweißverfahren oder mittels einem additiven Fertigungsverfahren auf den Grundkörper (3) aufgetragen wird. Derartige Leitwalzen (1) kommen an Substratbahnen oder Substratsträngen verarbeitenden Maschinen wie beispielsweise Rollendruckmaschinen, Anlagen zur Verarbeitung von bereits bedruckten Substratbahnen oder ähnlichen Anlagen zum Einsatz.

## Beschreibung

Die Erfindung betrifft eine als Leitwalze zum Führen und/oder Umlenken von Substratbahnen in Substrat verarbeitenden Maschinen ausgestaltete Polygonwalze, wobei die Leitwalze einen Polygonkörper umfasst, wobei der Polygonkörper einen Grundkörper aus einem ersten Werkstoff umfasst, wobei der Polygonkörper über den Umfang des Grundkörpers mindestens einen auf den Grundkörper aufgebrachten Steg umfasst.

Des Weiteren betrifft die Erfindung ein Verfahren zum Herstellen einer derartigen Leitwalze.

An Substratbahnen oder Substratsträngen verarbeitenden Maschinen wie beispielsweise Rollendruckmaschinen, Anlagen zur Verarbeitung von bereits bedruckten Substratbahnen oder ähnlichen Anlagen kommen Leitwalzen zum Einsatz, um sowohl eine unbedruckte Substratbahn als auch eine oder mehrere bereits bedruckte Substratbahnen oder eine aus einer Substratbahn geschnittene Teilbahn oder eine Mehrzahl von übereinander liegenden Substratbahnen oder eine Mehrzahl von übereinander liegenden Teilbahnen zu führen.

Hierzu kommen Leitwalzen in verschiedenen Ausführungen zum Einsatz, welche im Wesentlichen einen drehbar gelagerten Walzenkörper umfassen, welcher durch die zu führende mindestens eine Substratbahn oder Substratteilbahn in der Regel teilweise umschlungen wird. Die mit der Substratbahn in Kontakt befindlichen Mantelflächen des Walzenkörpers sind entweder zylindrisch ausgeführt, besitzen in die Mantelfläche eingearbeitete Nuten mit normalerweise kleinem Querschnitt zum Entweichen der eingeschlossenen Luft, oder die Walzenkörper sind als sogenannte Polygonwalzen mit einem nicht rein zylindrischen Querschnitt ausgeführt. Derartige Polygonwalzen haben sich aufgrund geringer Bahnverläufe, sehr geringer Faltenbildung und sehr konstant bleibender Bahnspannung auch bei starker Umlenkung und somit sehr starker Umschlingung von mindestens einer Substratbahn oder Substratteilbahnen als sehr vorteilhaft für das Führen derartiger bahnförmiger Substrate erwiesen.

Derartige Leitwalzen mit polygonförmigem Querschnitt des Walzenkörpers sind aus dem Stand der Technik bereits bekannt.

So offenbart die DE 10 2007 039 487 A1 eine Bahnleitwalze, auf deren Mantelfläche in Erstreckung der Rotationsachse Erhöhungen ausgebildet sind, so dass sich ein als Polygon ausgebildeter Querschnitt der Bahnleitwalze ergibt.

Die DE 198 57 123 C1 offenbart eine Leitwalze mit Erhöhungen und Vertiefungen auf der wirksamen Mantelfläche, wobei die Erhöhungen und Vertiefungen wendelförmig in die Mantelfläche eingearbeitet sind.

Abhängig vom Winkel der Erhöhungen und Vertiefungen zur Rotationsachse einer derartigen Leitwalze ist der Übergang zwischen einer Polygonwalze und einer Bahnleitwalze mit Wendelnut fließend, da bei entsprechend spitzem Winkel der Erhöhungen und/oder Vertiefungen zur Rotationsachse sich ebenfalls ein polygonförmiger Querschnitt der Leitwalze einstellt.

Derartige Polygonwalzen sind jedoch relativ aufwändig herzustellen, da derartige Stege bzw. die zwischen den Stegen liegenden Nuten spanend aus dem Werkstoff der Leitwalze herausgearbeitet werden müssen, was bei achsparallelen Stegen oder bei wendelförmigen Stegen beispielsweise durch Fräsen möglich ist. Werkstoffe mit geringer Härte wie beispielsweise Aluminium sind hierbei zwar relativ günstig zu bearbeiten, sind jedoch durch höheren Verschleiß aufgrund des Kontaktes mit der Substratbahn gekennzeichnet. Werkstoffe mit höherer Härte wie beispielsweise Stahl, insbesondere hochfester Stahl sind jedoch nur sehr aufwändig spanend zu bearbeiten, wenngleich sich derartige Polygonwalzen durch höhere Verschleißbeständigkeit auszeichnen.

Es ist somit Aufgabe der Erfindung, eine Leitwalze sowie ein Verfahren zur Herstellung einer Leitwalze zu schaffen, welche eine kostengünstige Herstellung einerseits und harte, verschleißbeständige, sich in Kontakt mit dem Substrat befindlichen Stegen andererseits verbindet.

Die Aufgabe wird dadurch gelöst, dass der mindestens eine Steg aus einem von dem ersten Werkstoff abweichenden zweiten Werkstoff besteht. Die Aufgabe wird ferner durch ein Verfahren gelöst, bei welchem die Stege oder der mindestens eine Steg mittels einem Auftragsschweißverfahren, einem thermischen Spritzverfahren, einem Plasma-Transfered-Arc-Spritzverfahren, einem Laser-Auftragsschweißverfahren oder mittels einem additiven Fertigungsverfahren auf den Grundkörper aufgetragen wird.

Dies ermöglicht zum einen eine kostengünstige Herstellung und gleichzeitig kann bei Verwendung sehr harter Werkstoffe als zweiter Werkstoff eine hohe Verschleißfestigkeit sichergestellt werden.

Gemäß einer Ausgestaltung der Erfindung weist der Grundkörper des Polygonkörpers eine um die Längsachse angeordnete, im Wesentlichen zylindrische Mantelfläche auf. Somit kann als Ausgangsprodukt für die Polygonwalze ein sehr kostengünstig herzustellendes Bauteil oder Halbzeug in Form eines Rohres oder eines Zylinders verwendet werden.

Es ist auch möglich, den aus dem ersten Werkstoff bestehenden Grundkörper zumindest partiell mit einer Beschichtung aus einem dritten Werkstoff, welcher vom ersten Werkstoff abweicht, zu beschichten.

Der zweite Werkstoff und somit der Werkstoff des mindestens einen Steges kann ein Metall, eine Metalllegierung oder eine Keramik sein.

Als Metall oder Metalllegierung des zweiten Werkstoffes kann ein verschleißfester Stahl oder ein Nicht-Eisen-Werkstoff oder eine Nicht-Eisen-Legierung wie beispielsweise Wolfram, eine Wolfram-Legierung, Nickel oder eine Nickel-Basis-Legierung verwendet werden.

Wird als zweiter Werkstoff eine Keramik verwendet, so kann diese aus einem aufgeschmolzenem oxidkeramischen Pulver bestehen, d. h. keramische Pulver mit beispielsweise Yttriumoxidstabilisiertes Zirkoniumoxid, Yttriumoxid, Aluminiumoxid, Chromoxid, Titanoxid, Lanthan-Strontium-Manganit als Basis.

Gemäß einer weiteren Ausgestaltung der Erfindung ist auf dem Grundkörper und/ oder auf der auf dem Grundkörper angebrachten Beschichtung im Bereich des mindestens einen Steges aus dem zweiten Werkstoff eine Haftschicht angebracht. Eine derartige Ausgestaltung kann in Abhängigkeit von der Werkstoffkombination erster Werkstoff / zweiter Werkstoff sinnvoll sein, um die Haftung des zweiten Werkstoffes auf dem Grundkörper oder der auf dem Grundkörper aufgebrachten Beschichtung zu erhöhen.

Bevorzugte Weiterbildungen der Erfindung ergeben sich aus den abhängigen Ansprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: drei unterschiedliche Ausgestaltungen von als Polygonwalzen ausgestalteten Leitwalzen:

- Fig. 1a:: eine Leitwalze mit wendelförmig angeordneten Stegen
- Fig. 1b:: eine Leitwalze mit achsparallelen Stegen
- Fig. 1c:: eine Leitwalze mit einem spiralförmigem Steg

- Fig. 2: einen Ausschnitt eines Grundkörpers aus einem ersten Werkstoff mit aufgebrachten Stegen aus einem zweiten Werkstoff
- Fig. 3: einen Ausschnitt eines Grundkörpers aus einem ersten Werkstoff mit aufgebrachten Stegen aus einem zweiten Werkstoff mit einer Beschichtung des Grundkörpers
- Fig. 4: eine beispielhafte Ausgestaltung von Stegen aus dem zweiten Werkstoff mit zwischen den Stegen sichtbarem Grundkörper
- Fig. 5: eine beispielhafte Ausgestaltung von Stegen aus dem zweiten Werkstoff mit zwischen den Stegen angeordnetem zweiten Werkstoff

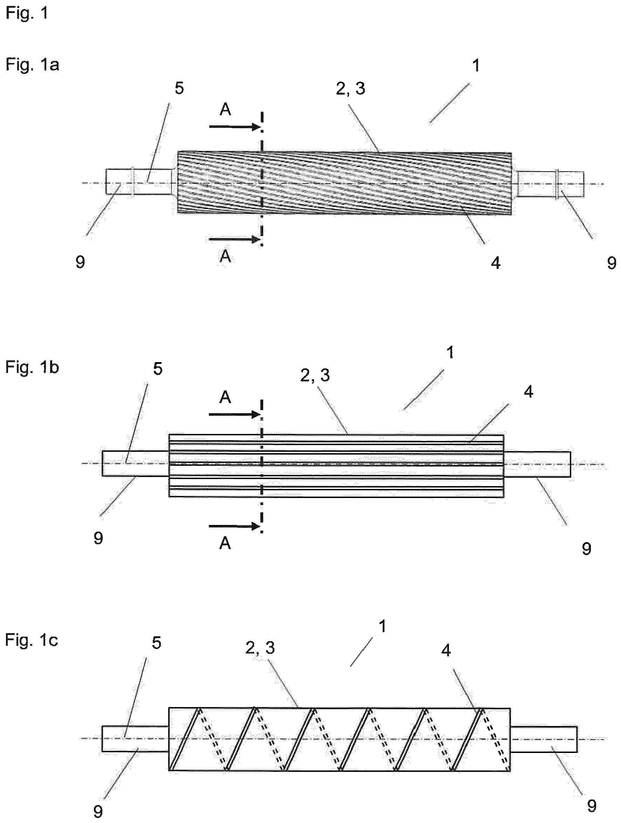

Die Figuren 1a bis 1c zeigen unterschiedliche Ausgestaltungen von erfindungsgemäßen, als Polygonwalzen ausgestalteten Leitwalzen 1.

Figuren 1a, 1b und 1c zeigen jeweils eine Leitwalze 1 umfassend einen Polygonkörper 2, welcher mit der zu transportierenden oder umzulenkenden mindestens einen nicht dargestellten Substratbahn oder der mindestens einen nicht dargestellten Substratteilbahn beim Einsatz in einer Substrat-verarbeitenden Maschine in Kontakt steht.

Die in den Figuren 1a bis 1c dargestellten beispielhaften Ausgestaltungen zeigen Ausführungen einer Leitwalze 1, welche auf beiden Seiten des Polygonkörpers 2 jeweils einen Walzenzapfen 9 umfasst, welcher formschlüssig, kraftschlüssig oder stoffschlüssig mit dem Polygonkörper 2 verbunden ist. Auf diese Walzenzapfen 9 können zeichnerisch nicht dargestellte Gleitlager oder Wälzlager angebracht werden, so dass die Leitwalze 1 in Gänze um die Längsachse 5 rotierbar ist.

Die Erfindung betrifft jedoch auch eine zeichnerisch nicht dargestellte Ausgestaltung einer Leitwalze 1 umfassend einen Polygonkörper 2, bei welchem der Polygonkörper 2 mittels Gleitlagern oder Wälzlagern auf einer Tragachse gelagert ist, so dass bei dieser Ausgestaltung die Tragachse an mindestens einer Seitenwand oder an einem Gestell befestigt werden kann.

Durch die drehbare Lagerung des Polygonkörpers 2 auf der Tragachse ist somit dieser und folglich auch die Leitwalze 1 um die Längsachse 5 der Leitwalze 1 drehbar gelagert.

Der in den Figuren 1a bis 1c dargestellte Polygonkörper 2 umfasst einen Grundköper 3, auf welchem mindestens ein Steg 4 stoffschlüssig angebracht ist. Bei den meisten Ausführungen ist eine Mehrzahl von Stegen 4 auf dem Grundkörper 3 stoffschlüssig angebracht, um durch die durch die Mehrzahl der auf den Grundkörper 3 aufgebrachten Stege 4 entstehenden Nuten einen polygonförmigen Querschnitt zu erhalten.

Fig. 1a zeigt ein Beispiel einer Leitwalze 1 mit einer Mehrzahl von auf dem Polygonkörper 2 angeordneten Stegen 4, welche wendelförmig auf den Grundkörper 3 aufgebracht sind. Die Stege 4 weisen einen spitzen Winkel zwischen der Längsachse 5 und einem jedem Steg 4 auf. Dieser Winkel liegt einem Bereich von 10° bis 40°, vorzugsweise zwischen 15° und 35°.

Fig. 1b zeigt ein Beispiel einer Leitwalze 1 mit einer Mehrzahl von auf dem Polygonkörper 2 angebrachten Stegen 4, wobei die Stege 4 parallel oder unter Berücksichtigung von Herstellungstoleranzen im Wesentlichen parallel zur Längsachse 5 angeordnet sind.

Während sich bei den in den Figuren 1a und 1b dargestellten Ausgestaltungen mit einer Mehrzahl von auf der Mantelfläche 6 des Grundkörpers 3 angeordneten Stegen 4 zweifelsfrei ein polygonförmiger Querschnitt ergibt, so ist dies bei Leitwalzen 1 mit einem größeren Winkel zwischen dem mindestens einen spiralförmig auf dem Grundkörper 3 angeordneten Steg 4 nicht auf den ersten Blick ersichtlich. Da aber der zwischen einem Steg 4 und der Längsachse 5 eingeschlossene Winkel für die Erfindung nur von untergeordneter Bedeutung ist, sei der Vollständigkeit halber die Erfindung auch anhand einer Leitwalze 1 mit nur einem spiralförmig angeordnetem Steg 4 erläutert.

Leitwalzen 1, bei denen die Stege 4 im Wesentlichen senkrecht zur Längsachse 5 verlaufen, können aufgrund des dann immer kreisförmigen Querschnittes unstrittig nicht als Leitwalze 1 mit polygonförmigem Querschnitt bezeichnet werden.

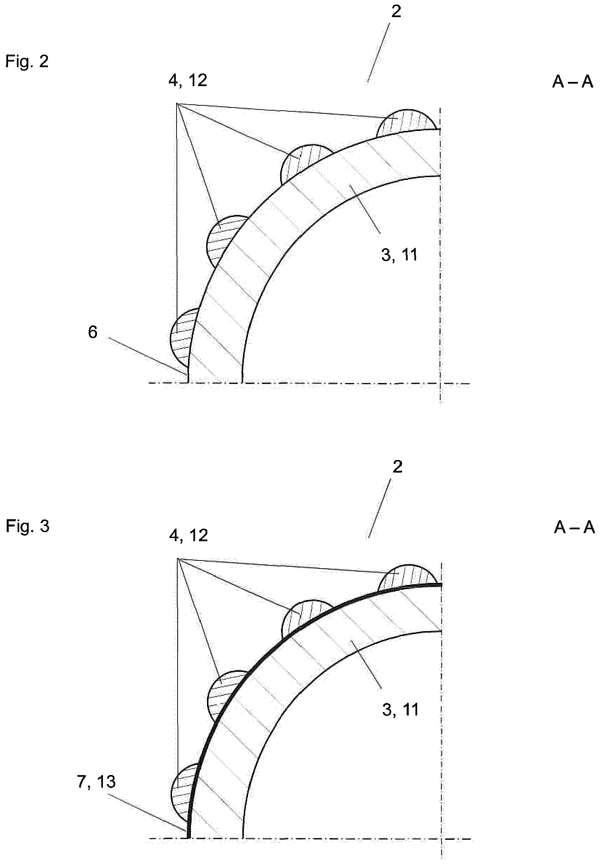

Fig. 2 zeigt einen Ausschnitt des Querschnittes A-A durch den Polygonkörper 2 aus den Figuren 1a oder 1b in beispielhafter Ausgestaltung. Hierbei ist zu erkennen, dass der Polygonkörper 2 einen Grundkörper 3 mit vorzugsweiser um die Längsachse 5 angeordneter, im Wesentlichen zylinderscher Mantelfläche 6 umfasst. Der Grundkörper 3 besteht aus einem ersten Werkstoff 11, wobei der erste Werkstoff 11 vorzugsweise ein Metall wie Aluminium, eine Aluminium-Legierung, Stahl oder eine Stahl-Legierung ist.

Der Polygonkörper 2 umfasst ferner auf der Mantelfläche 6 des Grundkörpers 3 stoffschlüssig angebrachte Stege 4, wobei die Stege 4 aus einem zweiten Werkstoff 12 bestehen, wobei der zweite Werkstoff 12 ein vom ersten Werkstoff 11 abweichender Werkstoff ist.

Der zweite Werkstoff 12 ist vorzugsweise ein Metall oder eine Metall-Legierung wie beispielsweise ein verschleißfester Stahl oder ein Nicht-Eisen-Werkstoff oder eine Nicht-Eisen-Legierung wie beispielsweise Wolfram, eine Wolfram-Legierung, Nickel oder eine Nickel-Basis-Legierung. Als zweiter Werkstoff 12 kann alternativ auch eine Keramik wie beispielsweise ein oxidkeramischer Werkstoff zum Einsatz kommen, wobei die Keramik oder die Oxidkeramik aus aufgeschmolzenem Pulver besteht.

Zur Herstellung eines derartigen Polygonkörpers 2 mit einem Grundkörper 3 aus einem ersten Werkstoff 11 und darauf wendelförmig oder achsparallel angeordneten Stegen 4 kann der mindestens eine Steg 4 beispielsweise mittels einem Auftragsschweißverfahren, einem thermischen Spritzverfahren, einem Plasma-Transfered-Arc-Spritzverfahren, einem Laser-Auftragsschweißverfahren oder mittels einem additiven Fertigungsverfahren wie beispielsweise dem 3D-Druck auf den Grundkörper 3 aufgetragen werden.

Fig. 3 zeigt analog zu Fig. 2 einen Ausschnitt des Querschnittes A-A durch den Polygonkörper 2 aus den Figuren 1a oder 1b in beispielhafter Ausgestaltung, wobei der Polygonkörper 2 einen Grundkörper 3 und eine darauf angebrachte Anzahl von Stegen 4 umfasst. Fig. 3 zeigt jedoch eine Ausgestaltung der Erfindung, bei welcher der Grundkörper 3 zumindest partiell eine Beschichtung 7 an seiner äußeren Mantelfläche 6 aufweist. Diese Beschichtung 7 kann mit einem dritten Werkstoff 13 oder alternativ mit dem zweiten Werkstoff 12 ausgeführt sein, um durch diese Beschichtung 7 beispielsweise die Verschleißfestigkeit oder die Korrosionsbeständigkeit des Grundkörpers 3 zu erhöhen, weshalb im Falle des Auftrages eines dritten Werkstoffes 13 dieser vom ersten Werkstoff 11 des Grundkörpers 3 abweichend ist. Die Beschichtung 7 ist von ihrer Stärke her in der Regel deutlich geringer als die Höhe der Stege 4.

Wenngleich zeichnerisch nicht dargestellt, so ist es auch möglich und bei bestimmten Kombinationen vom ersten Werkstoff 11, zweitem Werkstoff 12 und/oder drittem Werkstoff 13 auch vorteilhaft, auf dem Grundkörper 3 und/oder auf der optionalen Beschichtung 7 mindestens im Bereich des mindestens eines Steges 4 oder im Bereich der Mehrzahl der Stege 4, welcher aus dem zweiten Werkstoff 12 hergestellt ist, eine Haftschicht aufzubringen. Eine derartige Haftschicht erhöht die Haftung des mindestens einen Steges 4 auf dem Grundkörper 3 oder auf der Mantelfläche 6 des Grundkörpers 3 aufgebrachten Beschichtung 7.

Alternativ ist es auch möglich, die Haftschicht als Beschichtung 7 wie in Fig. 3 dargestellt, auszuführen, so dass die Haftschicht nicht nur im Bereich des mindestens einen Steges 4 oder im Bereich der Mehrzahl der Stege 4 aufgetragen wird. Abhängig vom Beschichtungsverfahren für die Haftschicht 8 und von den Materialkosten für die Haftschicht kann dies in Bezug auf die Herstellkosten vorteilhaft sein. Wenngleich zeichnerisch nicht dargestellt, so ist es auch möglich, den Polygonkörper 2, welcher den Grundkörper 3 und den mindestens einen Steg 4 umfasst, zumindest partiell mit einer Auflage zu beschichten. Die Auflage kann aus einem Werkstoff sein, welcher beispielsweise die Verschleißfestigkeit folglich auch des mindestens einen Steges 4 erhöht oder aber beispielsweise zur Vermeidung von sogenanntem Ablegen farbabstoßend wirkt, was bei Einsatz einer entsprechenden Leitwalze 1 bei bedruckten Substraten von Vorteil sein kann.

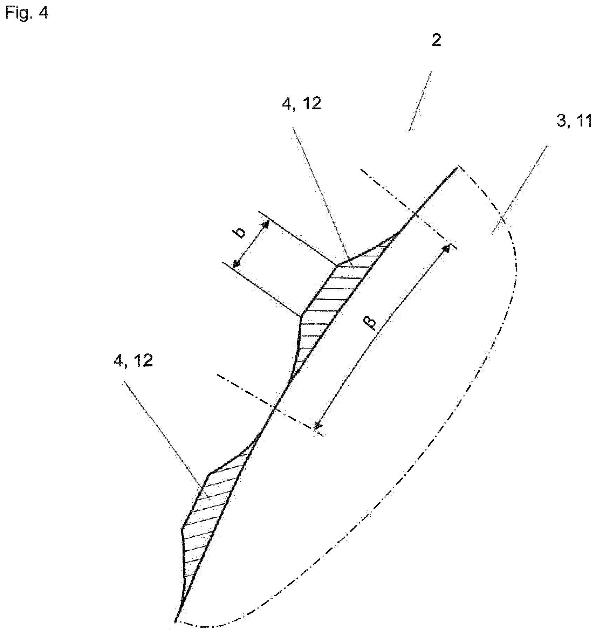

Fig. 4 zeigt eine beispielhafte Ausgestaltung einer erfindungsgemäßen Leitwalze 1, wobei die Fig. 4 wiederum vergleichbar zu den Figuren 2 und 3 einen Ausschnitt aus dem Querschnitt des Polygonkörpers 2 zeigt.

So zeigt Fig. 4 einen Ausschnitt aus dem Grundkörper 3 aus dem ersten Werkstoff 11, auf welchen eine Mehrzahl von Stegen 4 aus einem zweiten Werkstoff 12 stoffschlüssig aufgebracht sind. Beim Aufbringen der Stege 4 mittels einem Schweißverfahren (beispielsweise Auftragsschweißverfahren, thermisches Spritzverfahren, Plasma-Transfered-Arc-Spritzverfahren, Laser-Auftragsschweißverfahren etc.) entstehen die typisch konkav abfallenden Flanken sowie eine zumeist abgerundete Spitze der Stege 4. Aufgrund dieser in relativ weiten Toleranzen ausgestaltete Oberflächen der Stege 4 durch die relevanten Schweißverfahren ist somit die Kontaktfläche von den Stegen 4 mit der Substratbahn nur bedingt definiert, auch können die wirksamen Radien der jeweiligen Stege 4 bezogen auf die Längsachse 5 schwanken.

Gemäß einer Ausgestaltung der Erfindung wird der mindestens eine auf den Grundkörper 3 angebrachte Steg 4 zur Sicherstellung gleicher äußerster radialer Erstreckung bezogen auf die Längsachse 5 nach dem Auftragsschweißen spanend bearbeitet. Dies gewährleistet neben einem gleichbleibenden wirksamen Radius für alle Stege 4 bezogen auf die Längsachse 5 auch den Vorteil, dass die in Wirkverbindung mit dem Substrat stehende äußere Fläche eines Steges 4 einen Ausschnitt einer zylindrischen Mantelfläche aufweist.

Die Stegbreite b liegt üblicherweise in einem Bereich von 1 bis 10 mm, vorzugsweise im Bereich von 1,5 bis 5 Millimeter. Der Teilungswinkel β liegt in Abhängigkeit von Stegbreite b, der Kontur des Steges 4 und dem Durchmesser des Polygonkörpers 2 in einem Bereich von 5° bis 25°, vorzugsweise in einem Bereich von 5° bis 15°.

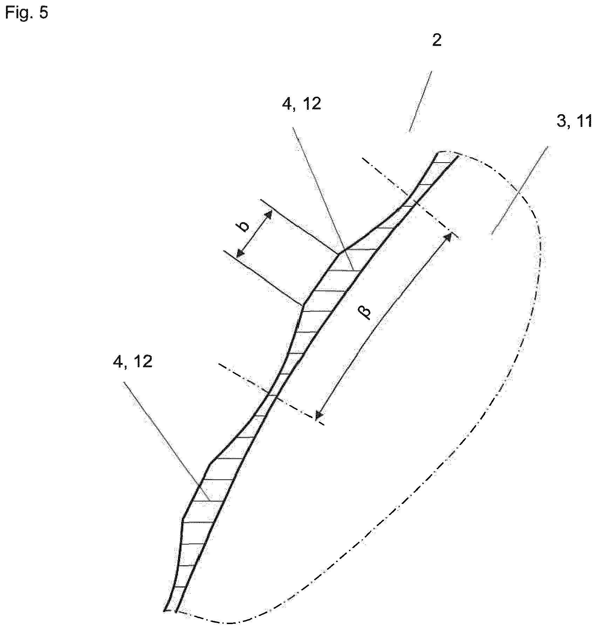

Fig. 5 zeigt eine weitere Ausgestaltung des Polygonkörpers 2, bei welcher der zweite Werkstoff 12, aus welchem die Stege 4 bestehen, auch zwischen den Stegen 4 auf den Grundkörper 3 aufgetragen ist, so dass die Mantelfläche 6 des aus dem ersten Werkstoff 11 gefertigten Grundkörpers 3 nicht mehr zwischen den Stegen 4 sichtbar ist, sondern dass die Bereiche zwischen den Stegen 4 von dem zweiten Werkstoff 12 bedeckt sind.

### Bezugszeichenliste

- 1: Leitwalze
- 2: Polygonkörper
- 3: Grundkörper
- 4: Steg
- 5: Längsachse
- 6: Mantelfläche
- 7: Beschichtung
- 9: Walzenzapfen

- 11: erster Werkstoff
- 12: zweiter Werkstoff
- 13: dritter Werkstoff

- b: Stegbreite
- β: Teilungswinkel

## Patentansprüche

1. Leitwalze (1) zum Führen und/oder Umlenken von Substratbahnen in Substrat verarbeitenden Maschinen, wobei die Leitwalze (1) einen Polygonkörper (2) umfasst, wobei der Polygonkörper (2) einen Grundkörper (3) aus einem ersten Werkstoff (11) umfasst, wobei der Polygonkörper (2) über den Umfang des Grundkörpers (3) mindestens einen auf den Grundkörper (3) aufgebrachten Steg (4) umfasst, **dadurch gekennzeichnet, dass** der mindestens eine Steg (4) aus einem von dem ersten Werkstoff (11) abweichenden zweiten Werkstoff (12) besteht.

2. Leitwalze (1) nach Anspruch 1, **dadurch gekennzeichnet, dass** der Grundkörper (3) des Polygonkörpers (2) eine um eine Längsachse (5) angeordnete, im Wesentlichen zylindrische Mantelfläche (6) aufweist.

3. Leitwalze (1) nach Anspruch 1, **dadurch gekennzeichnet, dass** der erste Werkstoff (11) Aluminium, eine Aluminium-Legierung, Stahl oder eine Stahllegierung ist.

4. Leitwalze (1) nach einem der Ansprüche 1 bis 3, **dadurch gekennzeichnet, dass** der Grundkörper (3) zumindest partiell eine Beschichtung (7) mit einem dritten Werkstoff (13) oder mit dem zweiten Werkstoff (12) umfasst.

5. Leitwalze (1) nach einem der Ansprüche 1 bis 4, **dadurch gekennzeichnet, dass** der zweite Werkstoff (12) des mindestens einen Steges (4) ein Metall, eine Metalllegierung oder eine Keramik ist.

6. Leitwalze (1) nach Anspruch 5, **dadurch gekennzeichnet, dass** das Metall oder die Metalllegierung ein verschleißfester Stahl oder ein Nicht-Eisen-Werkstoff oder eine Nicht-Eisen-Legierung wie beispielsweise Wolfram, eine Wolfram-Legierung, Nickel oder eine Nickel-Basis-Legierung ist.

7. Leitwalze (1) nach Anspruch 6, **dadurch gekennzeichnet, dass** die Keramik aus einem aufgeschmolzenen oxidkeramischen Pulver besteht.

8. Leitwalze (1) nach einem der Ansprüche 1 bis 6, **dadurch gekennzeichnet, dass** auf dem Grundkörper (3) und/oder auf der Beschichtung (7) im Bereich des mindestens einen Steges (4) eine Haftschicht angebracht ist.

9. Leitwalze (1) nach einem der Ansprüche 1 bis 8, **dadurch gekennzeichnet, dass** der mindestens eine Steg (4) parallel zur Längsachse (5) des Grundkörpers (3) oder wendelförmig auf der Mantelfläche (6) des Grundkörpers (3) angeordnet ist.

10. Leitwalze (1) nach einem der Ansprüche 1 bis 9, **dadurch gekennzeichnet, dass** der Polygonkörper (2) umfassend den Grundkörper (3) und mindestens einen Steg (4) zumindest partiell mit einer Auflage beschichtet ist.

11. Leitwalze (1) nach einem der Ansprüche 1 bis 10, **dadurch gekennzeichnet, dass** die Leitwalze (1) als Zapfenwalze umfassend an den Polygonkörper (2) angebrachte Walzenzapfen (9) ausgeführt ist.

12. Leitwalze (1) nach einem der Ansprüche 1 bis 10, **dadurch gekennzeichnet, dass** die Leitwalze (1) eine Tragachse umfasst, wobei der Polygonkörper (2) drehbar auf der Tragachse gelagert ist.

13. Verfahren zur Herstellung eines Polygonkörpers (2) einer Leitwalze (1) nach einem der Ansprüche 1 bis 12, **dadurch gekennzeichnet, dass** der mindestens eine Steg (4) mittels einem Auftragsschweißverfahren, einem thermischen Spritzverfahren, einem Plasma-Transfered-Arc-Spritzverfahren, einem Laser-Auftragsschweißverfahren oder mittels einem Additiven Fertigungsverfahren auf den Grundkörper (3) aufgetragen wird.

14. Verfahren zur Herstellung eines Polygonkörpers (2) einer Leitwalze (1) nach Anspruch 13, **dadurch gekennzeichnet, dass** der mindestens eine auf den Grundkörper (3) angebrachte Steg (4) zur Sicherstellung gleicher äußerster radialer Erstreckung bezogen auf die Längsachse (5) spanend bearbeitet wird.

15. Verfahren zur Herstellung eines Polygonkörpers (2) einer Leitwalze (1) nach Anspruch 13 oder Anspruch 14, **dadurch gekennzeichnet, dass** vor dem Auftragen des mindestens einen Steges (4) auf den Grundkörper (3) zumindest partiell eine Haftschicht (7) auf den Grundkörper (3) aufgetragen wird.
